# EUROPEAN PATENT APPLICATION

(11) **EP 2 187 348 A1**
(43) Date of publication of application: **19.05.2010**
(21) Application number: 09175530.6
(22) Date of filing: 10.11.2009
(51) Int. Cl.: G06Q 30/00, G06Q 10/00

(54) **Reproduction system and method for meeting place**

(30) Priority: 14.11.2008 IT TO20080843
(71) Applicant: Kali Lab S.r.l., 10048 Vinovo (Torino) (IT)
(72) Inventor: Calia, Finisiano, 10048 Vinovo (Torino) (IT); DiPietro, Salvatore, 10048 Vinovo (Torino) (IT)
(74) Representative: Robba, Pierpaolo

(57) **Abstract**

The present invention concerns a reproduction system for a meeting place, including at least one processor (11, 12, 18) connected to at least one projector (14) having at least one screen (14a), wherein the projector is arranged to project images processed by the processor (11, 12, 18). The processor of the system includes at least one input port (21, 35) arranged to receive messages with given contents from at least one mobile communication terminal (22b), program modules arranged to filter the message contents, and display program modules arranged to display the processed images and at least the filtered messages in predetermined areas of the screen (14a). The present invention also concerns a reproduction method for a meeting place.

## Description

### Technical field

The present invention generally relates to a reproduction system for meeting places, in particular for discos, clubs and the like, in which music and images are reproduced.

The present invention also relates to a reproduction method for meeting places.

### Prior art

It is known that in meeting places for a particularly large audience, for instance in discos, people have difficulty in socialising with other people in the same hall because of:
- high volume of music;
- low illumination;
- overcrowding and resulting difficulty in moving.

Indeed people, being overcome in particular by the volume of music, have difficulties in communicating and thus in satisfying possible needs for meeting and socialising.

It is also known that public meeting halls are equipped with multimedia equipment and that such equipment allows the whole audience to interact en masse in any event in progress in the hall.

A problem and a limit with such multimedia equipment is that it does not include components or devices enabling a personalised use, also intended to satisfy needs for meeting and/or socialising.

In general terms, the Applicant has realised that just the public meeting places, where people meets in order to spend happy hours and make new acquaintances, are organised with systems that, as a paradox, are of hindrance to the achievement of socialisation and communication objectives by the attending persons.

### Description of the invention

It is an object of the present invention to overcome the problems mentioned above.

The above object is achieved by the system for meeting places as claimed.

The present invention also concerns a reproduction method for meeting places, as well as an information technology product that can be loaded into the memory of at least one computer and comprises software code portions for carrying out the above method, when the product is executed on at least one computer. As used herein, the reference to such an information technology product is intended as being equivalent to the reference to a computer readable medium containing instructions for controlling a computer system or device in order to coordinate the execution of the method according to the invention.

The reference to "at least one computer" is directed to highlight the possibility that the present invention is performed in distributed manner on a plurality of computers.

The claims are integral part of the technical teaching provided herein in respect of the invention.

In accordance with a feature of a preferred embodiment, the system includes a processor configured to process images and to receive messages from a mobile communication terminal, for instance a cellular phone, and to display both the images and the messages in predetermined manner on a screen of a meeting place.

In accordance with another feature of the present invention, the processor in the system includes a server and a local processor located at the meeting place and configured to communicate with the server through a geographical network.

In accordance with a further feature of the present invention, the communication terminal communicates with the system processor in SMS mode or in "Bluetooth" mode, in the alternative.

### Brief Description of the Figures

The above and other features and advantages of the invention will become apparent from the following description of preferred embodiments thereof, made by way of non limiting example with reference to the accompanying Figure, in which elements denoted by a same or similar numerical reference correspond to components having the same or similar function and construction, and in which:

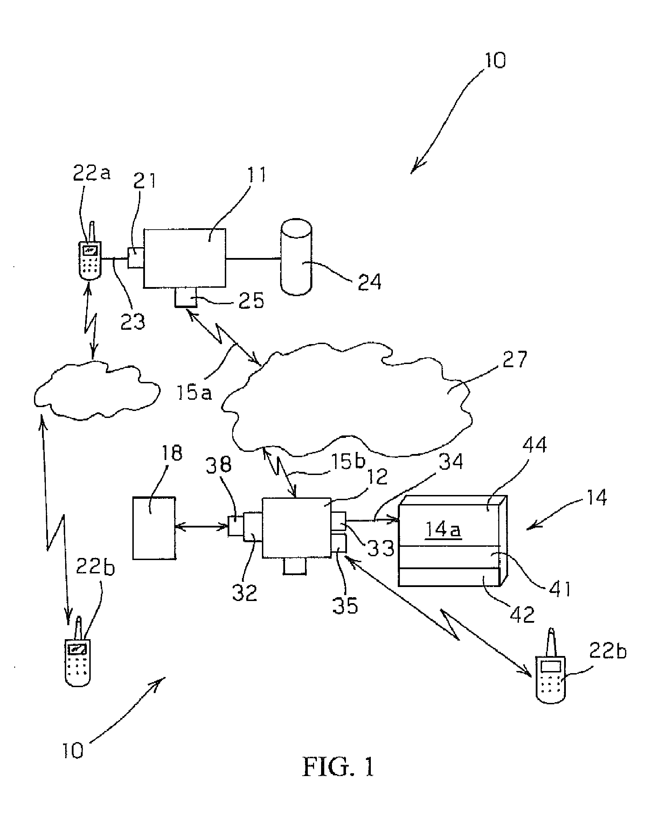

- Fig. 1 shows a system for meeting places according to the present invention.

### Description of a Preferred Embodiment

Referring to Fig. 1, a system 10 for meeting places, in accordance with a preferred embodiment, includes a server 11, for instance located at a remote location with respect to the meeting places, and at least one local processor 12, for instance a personal computer (PC), located at each meeting place and connected to server 11 in known manner, such as for instance through respective connections 15a, 15b to a geographical network 27, e.g. of the INTERNET type.

System 10 further includes one or more projection devices 14 connected to processor (PC) 12 and is connectable to at least one service processor 18.

Projection devices (projector) 14 preferably include predetermined projection surfaces or screens 14a, and are arranged to project on screen 14a, based on program modules developed in the system design phase and installed on server 11 and on PC 12, information coming from both server 11 and service processor 18, as it will be described in detail later on.

In particular, in the preferred embodiment, projector 14 is arranged to display on screen 14a, under the control of PC 12:
- images 44 coming from service processor 18;
- a first strip or first banner 41 containing, for instance, advertising information; and
- a second strip or second banner 41 containing, for instance, both text messages coming from server 11 and advertising information.

In accordance with the preferred embodiment, server 11 includes, for instance, a processor of known type having at least one data input/output port 21 of the USB (Universal Serial Bus) type, connected, according to a first embodiment, to a cellular phone 22a through a cable 23, and at least one connection port 25 connected to INTERNET network 27 through connection 15a.

Server 11 is preferably equipped with LINUX operating system and includes:
- a software program, of known type, arranged to manage messages, for instance of the SMS type (to which reference is made hereinafter for easiness of description), received from cellular phone 22a. In particular, in the present exemplary embodiment, it is envisaged that server 11 comprises the program named "Gammu", enabling, inter alia:

- the creation of a server for SMS management, arranged to acquire in continuous manner the messages received from cellular phone 22a;
- the storage of the received messages into a database 24, for instance a relational database of the "MySql" type;
- the cancellation from the cellular phone, after the storage, of the messages present therein.

Server 11 also includes:
- a WEB server program enabling PC 12 to acquire information from server 11 through a remote access. In particular, in the present exemplary embodiment, the WEB server is a WEB server of known type named "Apache", arranged to enable access to database 24 through program modules developed with a known scripting language, e.g. PHP (PHP Hypertext Pre-processor) language.

In the preferred embodiment, server 11 includes program modules developed during the system design phase, for instance in PHP language, and arranged, upon receiving access requests from PC 12, to:
- read the SMS messages from database 24, for instance in sequence;
- remove sensitive data, such as for instance telephone number, etc., from each message;
- filter, through a comparison with words stored in a suitably prepared file, the words considered as inappropriate and/or offending, by replacing for instance the characters of the detected words, or the central characters thereof, with asterisks or similar characters; in particular, such a function is performed by means of program modules arranged to:

- count the number of characters in the filtered word;
- leave the initial character and the final character unchanged;
- insert asterisks or similar characters in place of the intermediate characters;
- supply the WEB server with messages where the characters have been filtered in the above manner, in order the messages are passed to PC 12.

Server 11 further includes program modules for initialising or controlling the server functions. Such programs are for instance arranged to:
- attribute a given cellular phone 22a to a given PC 12 of a meeting place so that, upon the requests from PC 12, the message reception by the corresponding cellular phone 22a and the transmission of the messages received by such a cellular phone to PC 12 are activated;
- calculate the number of messages received by a given cellular phone within a given period;
- calculate the number of messages to be displayed within a given period, for instance as a function of the number of messages received within a given period;
- assign a duration of display on the second banner 42 to the messages; such a duration may be fixed or it may be determined depending on the message length or on other parameters calculated as described above;
- manage advertising information stored in the database so as to transmit it to PC 12 upon request, in order the information is displayed in the first and/or the second banner 41 or 42, respectively.

Lastly, server 11 also includes program modules for managing the server, which are configured, for instance, to:
- update the file containing the words considered as inappropriate and/or offending, which is used in the message filtering phase;
- update the advertising information stored in the database;
- perform statistics on messages and advertising information handled in the various banners.

PC 12, in the preferred embodiment, has for instance a WINDOWS XP operating system and includes a video acquisition board 32 connected in known manner, through an input port 38, to service processor 18, and at least one connection port or video output 33 arranged to be connected in known manner, through a cable 34 of known type, to projector 14 in order to project the images coming from service processor 18.

In particular, in accordance with the present exemplary embodiment, video acquisition board 32 is a PC board sold by company PINNACLE SYSTEMS.

Moreover, PC 12 is connected to the INTERNET network through connection 15b and it includes a program or browser known per se for access to the INTERNET, for instance browser WINDOWS INTERNET EXPLORER.

In the preferred embodiment, PC12 also includes software arranged to enable development of programs for displaying fixed or moving images or texts, for instance on screen 14a of projector 14.

In particular, in accordance with the present exemplary embodiment, program modules developed in the system design phase and stored in PC 12 are provided, which include at least one set of initialisation modules and one set of operating modules, developed for instance in FLASH language, known per se.

Initialisation modules include, for instance, modules arranged to:
- define, on screen 14a, projection areas corresponding to the first and second banners 41, 42;
- define a proper adaptation ratio of the images coming from service processor 18, so that they are reproduced on screen 14a without apparent dimensional distortions, as it will be described in detail later on;
- access server 11 through connections 15a and 15b and acquire and store:

- blocks of advertising information items (advertisements);
- duration of display of each SMS, if such a duration has been predefined as being constant for all SMS's;
- telephone number associated with the meeting place where PC 12 is installed;
- predefined time period or interval for interrogation of server 11 by PC 12.

In particular, in accordance with the present exemplary embodiment, among the initialisation modules, the adaptation modules are provided in order to solve a predetermined technical problem.

Actually, it is known that the projectors of the different meeting places generally have different characteristics and thus PC 12 has to include modules configured to solve the problem of adapting the characteristics of the images outgoing from service processor 18 with the characteristics of the images incoming to projection device 14.

For instance, reference is made herein to a video acquisition board 32, of known type, installed on PC 12 and capable of receiving images through input port 38 with a predetermined maximum resolution, in the present exemplary embodiment a resolution of 720 x 576 pixels, corresponding to the standard resolution for such kind of function.

Video output 33 of PC 12 is configured to use, in known manner, different display standards depending on the kind of projector 14 present in the meeting place.

Thus, in order to overcome the problem that the images projected on screen 14a of meeting place suffer from distortion, according to the present invention the adaptation modules developed in the design phase of system 10 are intended to perform the following functions:
- determining the output standard of service processor 18 and the standard envisaged for display on screen 14a;
- automatically compute, for each value of the output standard, corresponding adaptation values such that they enable the attainment of a ratio equal or close to the ratio or resolution of the video acquisition board, for instance 720 x 576 pixels (about 4/3);
- converting, by means of video acquisition board 32 and based upon the adaptation values computed, the images outgoing from service processor 18 and transmit them to projector 14 through video output 33 of PC 12.

The operating modules include, for instance, modules arranged to:
- acquire images from service processor 18 through acquisition board 32;
- adapt the acquired images based on the adaptation ratio determined by means of the initialisation modules, and transmit the adapted images to projector 14;
- acquire the SMS's and the advertising information from server 11.

The modules entrusted with the latter function include, for instance, modules arranged to:
- request a message stored in database 24 and/or the advertising information to server 11 by means of program modules developed for instance in FLASH language;
- manage and display the advertising information in the first and/or the second banner 41, 42;
- manage and display the message received from server 11 in the second banner 42.

In particular, the program modules arranged to manage and display the message received provide for:
- associating with the message a counter of a value corresponding to the message display duration;
- activating the message display, for instance through a rotation graphic, and at the same time setting and keeping the counter on until the count is over;
- when the count is over, cyclically requesting a new message to the server.

In the preferred embodiment, if no message to be displayed in response to a request is stored in database 24, the system provides for instance for displaying again the last received message or a standard message, and for repeating the request to the server at predetermined time intervals.

Still more particularly, in accordance with the preferred embodiment, the modules arranged to acquire and manage the SMS's and the advertising information provide for assigning one banner, for instance the first banner 41, to the display of advertising information and for assigning the second banner 42 to the sequential display of messages and advertising information.

In order to solve the problem of displaying the advertising information in a predetermined cyclical manner on the two banners, it is envisaged that the program modules developed in the design phase of system 10 and installed on PC 12 perform the following functions:
- define a global variable, or "global timer", in which an overall presentation time is inserted corresponding to the time interval elapsing between two presentations of a same advertisement among a plurality of different advertisements or of different sponsors to be shown;
- define a display duration for each advertisement;
- define the type of banner (first or second banner) allotted to each advertisement;
- share the "global timer" among the number of advertisements to be shown on the first and second banners;
- show the advertisements for the predetermined display duration with a timing determined by dividing the "global timer" by the number of different advertisements to be displayed or of different sponsors.

For instance, assuming that three different sponsors exist and that two of them are associated with the first banner 41 whereas the third sponsor is associated with the second banner 42, the "global timer", once it has been defined, preferably so as to have a value exceeding the overall duration of all advertisements to be displayed, will be divided into three time intervals, in which:
- at the first interval 1/3 the first sponsor will be presented on the first banner;
- at the second interval 2/3 the second sponsor will be presented on the first banner;
- at the third interval 3/3 the third sponsor will be presented on the second banner.

In accordance with the present exemplary embodiment, it is envisaged that at each presentation (1/3, 2/3, 3/3) the type of sponsor which is being presented (allotted to the first or the second banner) and the corresponding timer determining the duration of the display of the advertisement are detected.

At time 3/3 corresponding to the presentation of the sponsor allotted to the second banner 42, it is envisaged that the presentation of the message being displayed and the corresponding rotation graphics are immediately stopped, while leaving only the sponsor's image in the second banner. Only at the end of the duration of display of the sponsor allotted to the second banner, the program modules will provide for restoring the rotation graphics and the presentation of the SMS's, possibly by repeating the message that has been stopped while being displayed.

Thanks to the modules for the acquisition and management of messages and advertising information it is thus possible, for instance, to cyclically alternate SMS messages and advertisements of different sponsors on different banners.

The operation of the system described above is as follows,

Once the steps of setting server 11 and initialising PC 12 have been completed, server 11 of system 10 as described is arranged, in case of requests coming from PC 12, to retrieve the messages from database 24, filter them and forward the filtered messages to PC 12 through the INTERNET network in order they are displayed, e.g. with rotation graphics, on one of the banners, for instance the second banner 42.

In accordance with the present exemplary embodiment, the messages are sent, by users that preferably are present in the meeting place and are equipped with cellular phones 22b, to a telephone number advertised in the same meeting place and corresponding to cellular phone 22a connected to server 11 and assigned to the meeting place during the initialisation step.

The messages are displayed superimposed to the images generated by the service processor and transmitted to PC 12, and the message display can alternate with the presentation of advertising information.

In case the advertising information stops the display of a message on the same banner, the message can be wholly displayed after the advertising information has been displayed.

In accordance with the present exemplary embodiment, the images are such as to comply with the characteristics of the screen(s) 14a in the meeting place, since PC 12 is configured so as to take into account the characteristics of service processor 18 present in the meeting place (hall) and of video acquisition board 32.

System 10 as described enables the remote management of one or more meeting halls with a simple architecture, while guaranteeing a uniform quality and service level to all halls.

In particular, the system enables people in one hall to communicate with other people in the same hall with means of common use, while overcoming difficulties related with overcrowding or too high a music volume.

In accordance with another embodiment, which however maintains the basic features of the system, it is envisaged that messages transmitted inside the hall in "Bluetooth" mode are used in alternative or in addition to the use of SMS messages.

In such an embodiment, it is envisaged that PC 12 includes a device or input/output port 35 (for instance a PC adapter of known type) for reception from and transmission to mobile communication terminals 22b in Bluetooth mode, and program modules developed in the system design phase and arranged to:
- transmit to communication terminals 22b, e.g. cellular phones 22b of known type, a request for the agreement to receive program modules for message transmission;
- set cellular phones 22b present in the hall for message transmission to PC 12;
- transmit the messages received in Bluetooth mode to server 11, in order they are managed in substantially the same manner as the SMS messages.

In particular, the program modules are organised so as to:
- recognise the physical address (MAC address) of each cellular phone in the hall;
- possibly check that the MAC address is not already present in a list of addresses already managed by PC 12 or server 11;
- send, upon agreement by the user, the module allowing the user to transmit the messages in Bluetooth mode by using the MAC address as a reference associated with the cellular phone;
- receive the messages possibly transmitted by cellular phone 22b configured in such a manner;
- transmit the received messages and the MAC address to server 11 in order they are stored in the same database as the one in which SMS messages are sequentially stored.

Of course, in accordance with the present exemplary embodiment, it is also envisaged that server 11 has stored therein program modules arranged to receive from PC 12 and store in database 24 not only SMS messages but also Bluetooth messages and to manage all such messages in the manner described in connection with the first embodiment.

In accordance with a further embodiment, it is also envisaged that system 10 comprises a single processor comprising the devices of server 11 and PC 12 and arranged to perform the functions of both units.

In accordance with such an embodiment, it is envisaged that the processor is installed in the meeting place and that cellular phones 22b may communicate with cellular phone 22a in SMS mode with and Bluetooth device 35, respectively.

Of course, obvious changes and modifications in respect of size, shape, components, circuit elements, connections and contacts, as well as in respect of the details of the circuitry, of the illustrated construction and the operating method are possible without departing from the scope of the invention as set forth in the following claims.

## Claims

1. Reproduction system for a meeting place comprising:
- at least one computer (11, 12, 18) connected to at least one projector (14) having at least one screen (14a), said projector being arranged to project images processed by said computer (11, 12, 18);
**characterized in that**
- said at least one computer comprises
- at least one input port (21, 35) arranged to receive from at least one communication apparatus (22b) of mobile type messages having a certain content;
- program modules arranged to filter the content of said messages; and
- display program modules arranged to display on said at least one screen (14a) said processed images and at least said filtered messages in predetermined areas.

2. Reproduction system according to claim 1 **characterised in that** said computer (11, 12, 18) comprises
- at least a server (11);
- at least a local computer (12) located close to the meeting place and connected by means of a geographical type connection to the server (11) and by means of a local connection to the projector (14) and to a service computer (18) configured for transmitting images to be projected to said local computer (12);
-- said server (11) comprising said program modules arranged to filter the content of said messages;
-- said local computer (12) comprising said display program modules.

3. Reproduction system according to claim 2 **characterised in that**
- said display program modules comprise
- modules arranged to automatically compute an adaptation link between values associated to the images to be projected transmitted by said service computer (18) and values associated to the processed images by said local computer (12) and transmitted to sad projector (14).

4. Reproduction system according to claim 3 **characterised in that** said modules arranged to compute an adaptation link comprise modules configured
- to determine the output standard of the service computer (18);
- to calculate for every value corresponding to the output standard of the service computer (18) corresponding adaptation values;
- to convert on the basis of the adaptation values the images to be projected transmitted by said service computer (18).

5. Reproduction system according to any one of claims 1 to 4 **characterised in that** said at least one computer (11, 12, 18) comprises program modules configured for displaying
- the processed image on said screen (14a);
- advertising information on a first banner (41) of said screen;
- at least the filtered messages separate by the first banner on a second banner (42) of said screen.

6. Reproduction system according to claim 5 **characterised in that** said at least one computer (11, 12, 18) comprises program modules configured for
- defining a global variable including a total passing time corresponding to the time interval elapsing between two passages of a same advertising information within a plurality of different advertising information;
- defining for every advertising information a display length;
- defining for every advertising information the assigned banner (41, 42);
- sharing the total time among the number of advertising information to be displayed on the first and second banner (41, 42);
- displaying the advertising information within a predetermined display length according to a length computed by dividing the total time by the number of different advertising information to be displayed.

7. Reproduction method for a meeting place having at least a projector (14) with at least one screen (14a) arranged to display images processed by at least one computer (11, 12, 18) **characterised by** the steps of
- receiving messages having a certain content by at least one mobile communication apparatus (22b);
- filtering the content of said messages; and
- displaying on said at least one screen (14a) said processed images and at least said filtered messages in predetermined areas.

8. Reproduction method according to claim 7 **characterised in that**
- said step of displaying is carried out by at least one first computer (12) located close to the meeting place and configured for receiving images to be projected from a service computer (18); and
- said step of filtering the content of said messages is carried out by at least one second computer (11) connected by means of a geographical type connection to the first computer (12).

9. Reproduction method according to claim 8 **characterised in that** said step of displaying comprises the step of
- automatically computing an adaptation link between values associated to the images to be projected and values associate to the images processed by said first computer (12) and transmitted to said projector (14).

10. Computer program product or set of computer program products loadable in the memory of at least one computer and including software code portions arranged to perform, when the product is run on at least one computer, the method according to any one of claims 7 to 9.
